(19) Europäisches Patentamt
European Patent Office
Office européen des brevets

(11) **EP 2 504 599 B1**

(12) **EUROPÄISCHE PATENTSCHRIFT**

(45) Veröffentlichungstag und Bekanntmachung des Hinweises auf die Patenterteilung:
**17.06.2015   Patentblatt 2015/25**

(21) Anmeldenummer: **10763189.7**

(22) Anmeldetag: **07.10.2010**

(51) Int Cl.:
**F16D 65/14** *(2006.01)*

(86) Internationale Anmeldenummer:
**PCT/EP2010/065003**

(87) Internationale Veröffentlichungsnummer:
**WO 2011/064032 (03.06.2011 Gazette 2011/22)**

(54) **VERFAHREN ZUM BETREIBEN EINER FESTSTELLBREMSE EINES FAHRZEUGS**

METHOD FOR OPERATING A PARKING BRAKE OF A VEHICLE

PROCÉDÉ DESTINÉ AU FONCTIONNEMENT D'UN FREIN DE STATIONNEMENT D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2009   DE 102009047127**

(43) Veröffentlichungstag der Anmeldung:
**03.10.2012   Patentblatt 2012/40**

(73) Patentinhaber: **Robert Bosch GmbH**
**70442 Stuttgart (DE)**

(72) Erfinder:
• **BAEHRLE-MILLER, Frank**
**71101 Schoenaich (DE)**
• **BLATTERT, Dieter**
**74366 Kirchheim/Neckar (DE)**
• **HAUBER, Simon**
**71691 Freiberg am Neckar (DE)**
• **PUTZER, Tobias**
**74177 Bad Friedrichshall (DE)**

(56) Entgegenhaltungen:
DE-A1- 10 150 803     DE-A1-102005 051 082
DE-A1-102007 029 927

EP 2 504 599 B1

**Beschreibung**

Die Erfindung betrifft ein Verfahren zum Betreiben einer im Superpositionsbetrieb arbeitenden Feststellbremse eines Fahrzeugs, insbesondere Kraftfahrzeugs, wobei die Bremskraft der Feststellbremse mittels zweier unterschiedlicher, krafterzeugender Aktuatoren aufbringbar ist, die sich im Superpositionsbetrieb gegenseitig unterstützen.

Stand der Technik

Derartige Feststellbremsen und Verfahren zu ihrem Betreiben sind bekannt. Um ein Fahrzeug im Stillstand festzulegen, wird eine Feststellbremse angezogen. Eine derartige, im Superpositionsbetrieb arbeitende Feststellbremse wird einerseits zur Erzeugung der Bremskraft einerseits mit einem mechanischen Aktuator und andererseits mit einem hydraulischen Aktuator beaufschlagt. Beide Aktuatoren tragen anteilig zur Bremskraft, insbesondere Klemmkraft einer Scheibenbremse, bei. Die Kräfte der beiden Aktuatoren addieren sich zur Gesamtkraft. Die bekannte Feststellbremse weist einen Bremskolben auf, der von beiden Aktuatoren beaufschlagt wird. Zum Feststellen der Feststellbremse verlagert der elektromechanische Aktuator den Bremskolben in Richtung Bremsscheibe, wobei auf den Bremskolben, der sich aus dem Bremssattel durch die Verlagerung ein Stück weit herausbewegt, für die Superposition ferner ein Hydraulikfluid des hydraulischen Aktuators wirken kann. Durch die Verlagerung des Bremskolbens mittels des elektromechanischen Aktuators wird der hydraulische Arbeitsraum für das Hydraulikfluid im Bremssattel vergrößert. Durch die Volumenvergrößerung reduziert sich der Druck des Hydraulikfluids im Bremssattel beziehungsweise im dazugehörigen Bremskreis, der durch Nachströmen des Hydraulikfluids sowohl aus einem Reservoir als auch aus dem Bremskreis selbst wieder ausgeglichen wird. Aufgrund von Strömungswiderständen im Bremskreis (Leitungen, Ventile, Hauptbremszylinder, Viskosität der Bremsflüssigkeit usw.) wird jedoch eine Mindestzeit benötigt, bis sich ein neues Druckgleichgewicht eingestellt hat. Aufgrund dieser Umstände kann es dazu kommen, dass das erforderliche Hydraulikfluidvolumen für die Druckunterstützung nicht rechtzeitig bereitgestellt wird. Hinzukommt, dass dadurch möglicherweise der Antrieb des elektromechanischen Aktuators unnötig lange im Blockierbereich betrieben wird, was zu einer vermehrten Belastung der zugehörigen elektrischen/elektronischen Komponenten führt.

Aus der DE 10 2007 029 927 A1 sind beispielsweise eine Scheibenbremse für ein Kraftfahrzeug und ein entsprechendes Gehäuse bekannt. In dem Gehäuse ist entlang einer Längsachse ein Kolben verlagerbar. Weiterhin ist eine an dem Kolben eingreifende oder mit diesem in Eingriff bringbare Mutter-Spindelanordnung vorgesehen, wobei die Mutter-Spindelanordnung in dem Gehäuse angeordnet ist und sich an einer Stützfläche des Gehäuses über eine Lageranordnung kraftübertragend abstützt. Dabei soll die Stützfläche von einer gegenüber einem benachbarten Gehäusebereich vorspringenden definierten Anlagefläche, an welcher die Lageranordnung anliegt, ausgebildet sein. Aus der DE 101 50 803 A1 ist zudem eine hydraulische Fahrzeugbremse mit elektrisch betätigbarer Feststelleinrichtung bekannt.

Offenbarung der Erfindung

Das erfindungsgemäße Verfahren zum Betreiben der im Superpositionsbetrieb arbeitenden Feststellbremse des Fahrzeugs, insbesondere Kraftfahrzeugs, bei dem die Bremskraft der Feststellbremse mittels der beiden unterschiedlichen, krafterzeugenden Aktuatoren aufgebracht wird, die sich im Superpositionsbetrieb gegenseitig unterstützen, wird der krafterzeugende, insbesondere druckerzeugende Aktuator für die Unterstützung bereits vor der Superposition zur Druckabfallverhinderung oder Druckabfallminderung aktiviert. Damit kommt es nicht zu dem vorstehend erwähnten Druckabfall oder nicht zu einem starken Druckabfall und damit zu optimal kurzen Stellzeiten. Durch die Aktivierung des genannten Aktuators wird das Hydraulikmedium in die durch die Verlagerung des Bremskolbens bewirkte Volumenvergrößerung sofort, also zeitlich zusammen mit der Bewegung des Bremskolbens, nachfließen. Ferner verbessert sich das Lastprofil für den Antrieb des anderen Aktuators und auch die übrigen elektrischen und elektronischen Einrichtungen werden weniger gefordert.

Nach einer Weiterbildung der Erfindung ist vorgesehen, dass als der eine, erste Aktuator ein hydraulischer Aktuator verwendet wird.

Als der andere, zweite Aktuator wird vorzugsweise ein elektromechanischer Aktuator verwendet.

Der Aktuator, der die Unterstützung vornimmt, ist vorzugsweise der hydraulische Aktuator, das heißt, das Feststellen der Feststellbremse erfolgt mittels des zweiten, elektromechanischen Aktuators, wobei während dieses Vorgangs der erste Aktuator unterstützend hinzutritt, der als hydraulischer Aktuator ausgebildet ist.

Es ist vorteilhaft, wenn der Hydraulikdruck des ersten Aktuators von einer Hydraulikpumpe geliefert wird und dass die Druckzuschaltung der Hydraulikpumpe beim Erreichen eines vorgebbaren Hochlaufbetriebspunkts eines ersten Antriebs des ersten Aktuators erfolgt. Nach dem Einschalten des ersten Antriebs läuft dieser daher hoch, wobei die von ihm angetriebene Hydraulikpumpe beim Erreichen des Hochlaufbetriebspunkts bereits einen Hydraulikfluiddruck liefern kann, der das schnelle Einströmen von Hydraulikfluid in die durch Verlagerung des Bremskolbens bewirkte Volumenvergrößerung bewirkt.

Die Erfindung sieht vor, dass das Einschalten des ersten Antriebs in Abhängigkeit von einem elektrischen Spannungsverlauf und/oder Drehzahlverlauf eines zweiten, den zweiten Aktuator antreibenden Antriebs erfolgt. Der erste Antrieb, der dem hydraulischen Aktuator angehört, wird demzufolge in Abhängigkeit vom Zustand des zweiten, den zweiten Aktuator antreibenden Antriebs vorgenommen. Der zweite Antrieb ist vorzugsweise ein elektrischer Antrieb, der beim Einschalten den erwähnten elektrischen Spannungsverlauf und/oder Drehzahlverlauf aufweist. Ist ein bestimmter Betriebspunkt im Spannungsverlauf und/oder Drehzahlverlauf erreicht, so wird der erste Antrieb eingeschaltet.

Wie bereits im Hinblick auf den zweiten Antrieb erwähnt, kann dieser als Elektroantrieb ausgebildet sein. Für den ersten Antrieb, also für das Antreiben des hydraulischen Aktuators, insbesondere von dessen Hydraulikpumpe, kann vorzugsweise ebenfalls ein Elektroantrieb verwendet werden.

Nach einer bevorzugten Ausführungsform der Erfindung ist vorgesehen, dass die zwischen Aktivierung und Superposition liegende Zeitspanne temperaturabhängig festgelegt wird. Als Temperatur kann vorzugsweise die Temperatur des bereits erwähnten Hydraulikfluids des hydraulischen Aktuators und/oder die Außentemperatur verwendet werden. Die Temperatur wirkt sich unmittelbar auf die Viskosität des Hydraulikfluids, insbesondere der Bremsflüssigkeit, aus, wodurch die Nachströmzeit des Hydraulikfluids bei der erwähnten Bremskolbenverlagerung beeinflusst wird. Insofern berücksichtigt das vorstehende Vorgehen die bei unterschiedlichen Temperaturen verschiedene Viskosität, indem die genannte Zeitspanne mehr oder weniger groß gewählt wird.

Die Erfindung betrifft ferner ein Steuergerät, enthaltend Mittel, die zur Durchführung des vorstehenden Verfahrens ausgestaltet sind.

Die Zeichnungen veranschaulichen die Erfindung anhand eines Ausführungsbeispiels und zwar zeigt:

Figur 1    eine schematische Ansicht einer im Superpositionsbetrieb arbeitenden Feststellbremse eines Fahrzeugs,

Figur 2    eine Schnittansicht durch eine Feststellbremse gemäß Figur 1 und

Figur 3    ein Zeitdiagramm verschiedener Größen beim Betreiben der Feststellbremse gemäß der Figuren 1 und 2.

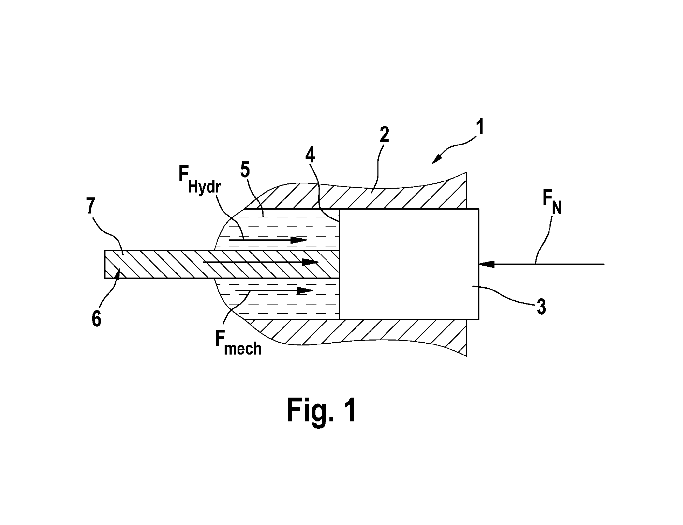

Die Figur 1 zeigt in schematisierter Darstellung einen Bereich einer Feststellbremse 1 eines nicht dargestellten Kraftfahrzeugs. Die Feststellbremse 1 weist einen Bremssattel 2 auf, in dem ein Bremskolben 3 längsverschieblich geführt ist. Der Bremskolben 3 kann auf seiner einen Seite 4 mittels eines Hydraulikfluids 5 beaufschlagt werden, wobei durch den Druck des Hydraulikfluids 5 eine Kraft $F_{Hydr}$ aufgebracht wird. Ferner kann auf die Seite 4 des Bremskolbens 3 eine mechanische Kraft $F_{mech}$ wirken, wobei die beiden erwähnten Kräfte $F_{Hydr}$ und $F_{mech}$ sich einander überlagern, also ein Superpositionsbetrieb vorliegt und den Kolben gemeinsam nach rechts verschieben, wobei sich dort (in Figur 1 nicht dargestellt) eine Bremsscheibe der Feststellbremse 1 befindet, die insofern mit einer Bremskraft $F_N$ beaufschlagt wird. In Figur 1 ist angedeutet, dass die mechanische Kraft $F_{mech}$ mittels eines elektromechanischen Aktuators 6 erzeugt werden kann, da die schematische Darstellung einen Spindeltrieb 7 zeigt.

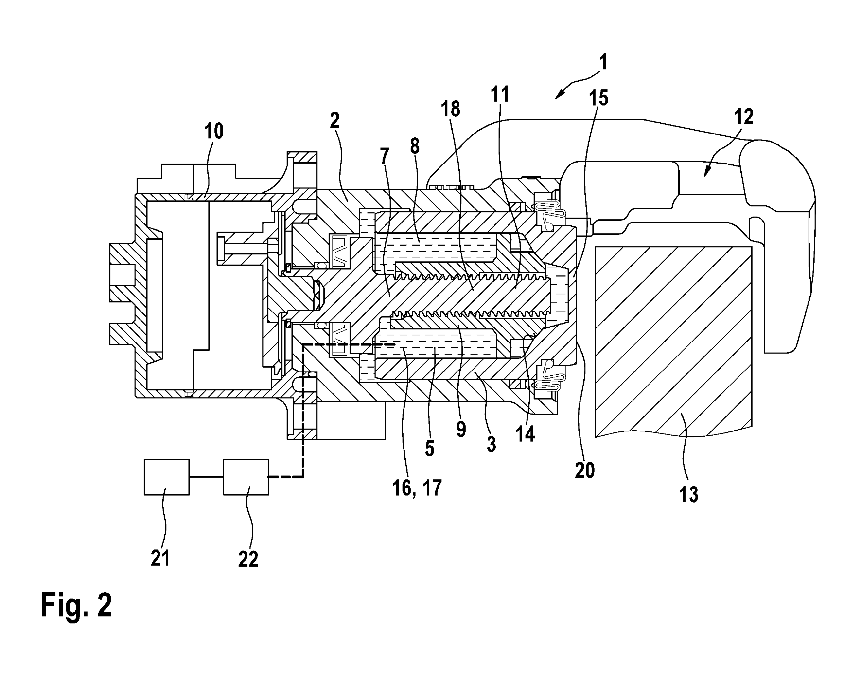

Die Figur 2 verdeutlicht die Figur 1 durch Darstellung konstruktiver Merkmale. Der Bremskolben 3, der längsverschieblich im Bremssattel 2 lagert, ist topfförmig gestaltet, wobei sich im Topfinneren 8 eine Mutter 9 des erwähnten Spindeltriebs 7 befindet. Die Mutter 9 ist längsverschieblich, jedoch nicht drehbar im Topfinneren 8 angeordnet und auf eine Gewindestange 11 aufgeschraubt, die mittels eines elektrischen Antriebs 10 in Drehung versetzt werden kann. Gewindestange 11 und Mutter 9 bilden den erwähnten Spindeltrieb 7. In eine Bremszange 12 der Feststellbremse 1 ragt der äußere Umfang einer Bremsscheibe 13 hinein, die gebremst wird, wenn sich der Bremskolben 3 nach rechts bewegt, also mit seiner Außenseite 20 gegen die Bremsscheibe 13 tritt. Um die Feststellbremse 1 festzustellen wird der elektrische Antrieb 10 in Betrieb genommen, so dass sich die Gewindestange 11 dreht und die Mutter 9 daher gegen die Innenseite 14 des Topfbodens 15 des topfförmigen Bremskolbens 3 tritt. Da diese Innenseite 14 des Topfbodens 15 auch von dem Hydraulikfluid 5 (Bremsflüssigkeit) beaufschlagt ist, ergibt sich durch die Verlagerung des Bremskolbens 3 eine Vergrößerung des hydraulischen Arbeitsraumes. Dies erfordert, dass möglichst schnell Hydraulikfluid 5 nachströmt. Für dieses schnelle Nachströmen wird erfindungsgemäß Sorge getragen. Aus alledem wird deutlich, dass die Bremskraft der Feststellbremse 1 einerseits von einem ersten Aktuator 16, der als hydraulischer Aktuator 17 ausgebildet ist beaufschlagt wird, wobei der hydraulische Aktuator 17 von der Hydraulikfluid/Bremskolben-Anordnung gebildet wird. Andererseits ist ein zweiter Aktuator 18, der als elektromechanischer Aktuator 6 ausgebildet ist, vorgesehen, welcher die Spindeltrieb/Bremskolben-Anordnung umfasst. Im Vorstehenden sind etwaige Bremsbeläge und dergleichen nicht extra erwähnt, da der Aufbau einer Feststellbremse 1 grundsätzlich bekannt ist. Um das genannte schnelle Nachströmen von Hydraulikfluid 5 zu gewährleisten, wird ein weiterer Antrieb, der als elektrischer Antrieb 21 ausgebildet ist, in Abhängigkeit von Funktionsparametern des bereits genannten elektrischen Antriebs 10 frühzeitig aktiviert. Insofern stellt der elektrische Antrieb 21 einen ersten Antrieb und der elektrische Antrieb 10 einen zweiten Antrieb der Feststellbremse 1 dar. Der erste elektrische Antrieb 21 treibt eine Hydraulikpumpe 22 an, die das Hydraulikfluid 5 druckbeaufschlagt. Durch den Druck des Hydraulikfluids wird der Bremskolben 3 beaufschlagt, so dass er - wie erwähnt - in Richtung auf die Bremsscheibe 13 verlagert wird. Demzufolge arbeiten die beiden Aktuatoren 16 und 18 im Superpositionsbetrieb, das heißt, sie tragen beide einen Anteil zum Aufbringen der Bremskraft bei.

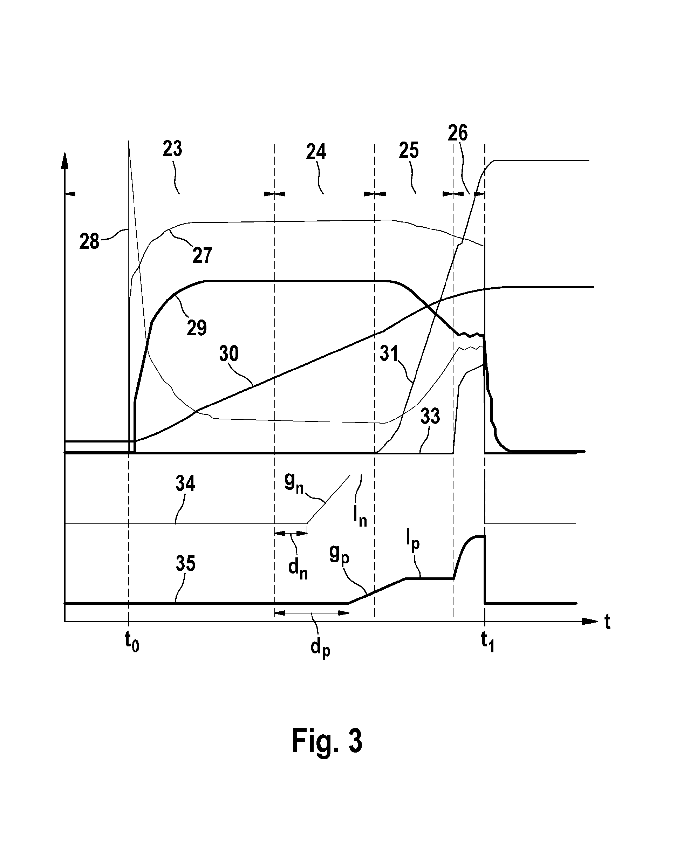

Das Diagramm der Figur 3 verdeutlicht die vorstehend erläuterte Arbeitsweise. Die Verfahrensabläufe sind in vier nacheinander ablaufende Zeitphasen 23, 24, 25 und 26 unterteilt. Die Zeit t ist auf der Abzisse des Diagramms der Figur 3 dargestellt. Soll die Feststellbremse 1 festgestellt werden, so wird der elektrische Antrieb 10 an elektrische Spannung 27 gelegt. Der Spannungsverlauf ist in der Figur 3 mit dem Bezugszeichen 27 gekennzeichnet. Zum Zeitpunkt $t_0$ erfolgt die Einschaltung, so dass die elektrische Spannung 27 am elektrischen Antrieb 10 sprungartig während der Zeitphase 23 ansteigt und dann bogenförmig in ein maximales Spannungsplateau in der Zeitphase 23 einmündet. Zum Zeitpunkt $t_0$ steigt der elektrische Strom des elektrischen Antriebs 10 peakartig an und fällt dann sehr schnell wieder ab und mündet dabei bogenförmig in ein Arbeitsstromniveau während der Zeitphase 23 ein. Die Motordrehzahl 29 des elektrischen Antriebs 10 steigt kurz nach dem Einschaltpunkt $t_0$ sehr schnell an und erreicht dann ein oberes Niveau innerhalb der Zeitphase 23. Ferner ist aus der Figur 3 entnehmbar, dass der von der Mutter 9 zurückgelegte Weg 30 ab dem Zeitpunkt $t_0$ etwa kontinuierlich ansteigend innerhalb der Zeitphase 23 immer größer wird. Mit 31 ist in der Figur 3 der Verlauf der mechanischen Bremskraft $F_{mech}$ dargestellt, die während der Zeitphase 23 ein gleichbleibendes Niveau aufweist, da die Mutter 9 den Bremskolben 3 noch nicht erreicht hat. Mit 33 ist der Hydraulikdruck gekennzeichnet, also der Druck im Hydrauliksystem, das das Hydraulikfluid 5 aufweist. Während der Zeitphase 23 liegt auch hier ein konstantes Niveau vor. Die Kurve 34 zeigt den Verlauf der Drehzahlanforderung des ersten elektrischen Antriebs 21 und die Kurve 35 zeigt den Verlauf der Druckanforderung im hydraulischen System also im ersten Aktuator 16.

Es ist aus der Figur 3 erkennbar, dass die Bremskraft 31 des elektromechanischen Aktuators 6 erst nach Ablauf der ersten Zeitphase 23 und der zweiten Zeitphase 24 zu Beginn der dritten Zeitphase 25 ansteigt, das heißt hier beginnt die Mutter 9 den Bremskolben 3 gegen die Bremsscheibe 13 zu drücken. Gleichwohl ist erkennbar, dass bereits in der zweiten Zeitphase 24 die Drehzahlanforderung 34 bezüglich ersten elektrischen Antriebs 31 ansteigt und nach einer Ansteigrampe auf einem erhöhten Niveau verbleibt. Am Ende der Anstiegrampe der Drehzahlanforderung 34 steigt die Druckanforderung 35 im Hydrauliksystem rampenartig an bis auf ein gleichbleibendes Niveau, das bis zum Ende der dritten Zeitphase 25 konstant bleibt. In der vierten Zeitphase 26 erfolgt der bereits erwähnte Superpositionsbetrieb, das heißt, die Bremskraft 31 des elektromechanischen Aktuators 6 wird unterstützt durch die vom hydraulischen System aufgebrachte Bremskraft. Deutlich ist erkennbar, dass der Hydraulikdruck 33 zu Beginn der vierten Zeitphase 26 stark ansteigt und am Ende der Zeitphase 26 sein höchstes Niveau erreicht. Während der Zeitphase 26 steigt ebenfalls die Bremskraft 31 des elektromechanischen Systems weiter an und erreicht am Ende dieser Phase das höchste Niveau. Zum Zeitpunkt $t_1$ wird das System ausgeschaltet, das heißt, die beiden Antriebe 10 und 21 werden außer Betrieb genommen, so dass der Hydraulikdruck 33 wieder auf das ursprüngliche Niveau sinkt und der elektromechanische Aktuator 6 eine Verriegelungsfunktion der Feststellbremse 1 übernimmt, so dass die Feststellbremse 1 hinreichend fest angezogen verbleibt. Aus dem Vorstehenden wird deutlich, dass der Aktuator 16 für die Unterstützung des Aktuators 18 bereits vor der Superposition aktiviert wird, um einen Druckabfall im hydraulischen System oder eine Druckabfallminderung im hydraulischen System zu schaffen, das heißt, die durch die von dem elektromechanischen Aktuators 6 vorgenommene Verlagerung des Bremskolben 3 gebildete hydraulische Arbeitsraumvergrößerung wird durch frühzeitige Aktivierung des hydraulischen Aktuators 17 sofort mit Hydraulikfluid 5 aufgefüllt, so dass sehr schnell die notwendige Klemmkraft an der Feststellbremse 1 aufgebaut werden kann.

Bevorzugt liegt ein Regel- und/oder Ansteuerkonzept für die Feststellbremse 1 vor, das eine lastoptimierte Ansteuerung der elektrischen Komponenten erlaubt, wobei die Lastoptimierung den Einsatz elektrisch kleindimensionierter Komponenten zulässt. Eine Steifigkeitsabschätzung des Bremssattels 2, die üblicherweise durchgeführt wird, wird trotz der erfindungsgemäßen frühzeitigen Ansteuerung des elektrischen Antriebs 21 der Hydraulikpumpe 22 nur unwesentlich beeinflusst. Durch die Erfindung liegt eine optimal kurze Stellzeit für den Bremskolben 3 der Feststellbremse 1 vor. Ferner kann das Lastprofil des elektrischen Antriebs 10 sowie von gegebenenfalls einzusetzenden elektrischen Steuergeräten minimiert werden.

Während der ersten Zeitphase 23 und der zweiten Zeitphase 24 wird vorzugsweise die Motordrehzahl des elektrischen Antriebs 10 ausgewertet und damit der Zeitpunkt für die Zuschaltung der Hydraulikpumpe 23 definiert. Um das Geräusch des elektrischen Antriebs 21 und/oder der Hydraulikpumpe 22 zu minimieren, wird der erste Antrieb 21 mit möglichst geringer Drehzahl betrieben.

Die Unterstützung, also die Superposition in der Zeitphase 26, wird vorzugsweise derart vorgenommen, dass die Zangensteifigkeit des Bremssattels 2 der Feststellbremse, die in der Zeitphase 25 ermittelt wurde, verwendet wird, um mittels Wegsteuerung die Zielklemmkraft einzustellen (siehe auch Seite 9, erster Absatz).

Insbesondere ist vorgesehen, dass die Druckanforderung während der Vorsteuerung temperaturabhängig erfolgt. Hierzu wird vorzugsweise die Temperatur des Hydraulikfluids 5, also der Bremsflüssigkeit, gemessen. Bei der erfindungsgemäßen Drucksteuerung, also dem möglichst schnellen Auffüllen des sich vergrößernden hydraulischen Arbeitsraumes, kann die Temperatur des Hydraulikfluids 5 Berücksichtigung finden, beispielsweise mittels Kennlinien, die auf die Drucksteuerung einwirken. Mit fallender Temperatur ist ein Nachströmen von Hydraulikfluid 5 verlangsamt, so dass die erfindungsgemäße Drucksteuerung entsprechend ausgleichen muss.

Es kann auch ein fester Wert für die Temperatur des Hydraulikfluids 5 angenommen werden, so dass dann auch von einer konstanten Viskosität des Hydraulikfluids 5 auszugehen ist. Dementsprechend ergibt sich ein zu erwartender Druckabfall bei einer Verlagerung des Bremskolbens 3 mittels des elektromechanischen Aktuators 6, dem durch die erfindungsgemäße Drucksteuerung entgegengewirkt wird. Insbesondere können Kosten für einen Drucksensor eingespart werden.

Es ist auch möglich, die Temperatur der Bremsflüssigkeit, also des Hydraulikfluids 5, als korrelierend mit der Außentemperatur anzunehmen und dementsprechenden dem zu erwartenden Druckabfalls mittels der erfindungsgemäßen Drucksteuerung entgegenzuwirken. Insbesondere können Kosten für einen zusätzlichen Drucksensor eingespart werden.

Zu den einzelnen Zeitphasen 23 bis 26 sei noch folgendes erwähnt. In der Zeitphase 23 liegt der Motorstart vor, das heißt, der elektrische Antrieb 10 wird gestartet. Auf den Einschaltstrompeak, der aus der Figur 3 hervorgeht, wurde bereits hingewiesen. Gleichzeitig verändert sich die Motordrehzahl 29 sehr schnell, da der Motor beschleunigt wird. Dies ergibt sich aus der die Motordrehzahl darstellende Kennlinie 29. Während der elektrische Strom 28 in der Zeitphase 23 mit fortschreitender Zeit sehr stark sinkt, werden der elektrische Strom 28, die elektrische Spannung 27 und/oder die Motordrehzahl 29 ausgewertet und eine aktuelle Motorkonstante $K_M$ und ein Motorwiderstand $R_M$ berechnet. Dies kann insbesondere mittels iterativen Schätzverfahren erfolgen. In der zweiten Phase, also der Zeitphase 24 erfolgt ein Betrieb des elektrischen Antriebs 10 ohne Last, so dass sich ein Leerlaufstrom einstellt. Die Höhe des Leerlaufstroms ist dabei ein Maß für das Leerlaufmoment des elektrischen Antriebs 10. In der Phase 3, also der Zeitphase 25, erfolgt ein Kraftaufbau an der Feststellbremse 1. Mit Hilfe der in den vorhergehenden Zeitphasen 23 und/oder 24 ermittelten Parameter $K_M$, $R_M$ und dem Leerlaufmoment des elektrischen Antriebs 10 und den aktuellen Werten für Strom 28, Spannung 27 und Motordrehzahl 29 kann das tatsächliche Motormoment des elektrischen Antriebs 10 mittels mechanischer und elektrischer Motordifferenzialgleichungen abgeschätzt werden. Bei bekannter Untersetzung (Getriebe, Spindelsteigung des Spindeltriebs 7) und Wirkungsgrade der mechanischen Kette der einzelnen Bauteile (Rotation -> Translation) kann damit die Klemmkraft der Feststellbremse 1 abgeschätzt werden. Weiterhin wird in der Zeitphase 25 auch die Federsteifigkeit der Bremszange des Bremssattels 2 ermittelt. Dabei wird die Bremskraftzunahme gegenüber dem zurückgelegten Weg des Bremskolbens 3 ausgewertet. Ist die geforderte elektromechanisch gestellt Klemmkraft $F_{mech}$ erreicht, werden der aktuell elektrische Strom 28, die errechnete Steigung (Federsteifigkeit) und die aktuelle Klemmkraft zwischengespeichert. In der vierten Phase, also der Zeitphase 26 erfolgt die Regelung der Superposition. Der Motorstrom des elektrischen Antriebs 10 wird dabei so eingeregelt, dass die Superposition im weiteren Verlauf konstant bleibt. Durch eine Druckbereitstellung wird der Bremssattel 2 entlastet, das Abgabemoment des elektrischen Antriebs 10 bleibt damit weitgehend konstant und durch eine Rotation des elektrischen Antriebs 10 wird die weitere Bremszangenerweiterung erfasst (Umrechung Rotationen in Translation). Zusammen mit der ermittelten Zangensteifigkeit in der Zeitphase 25 ergibt sich die Klemmkraft:

$$F_{cfinal} = \eta_{mech} \cdot Fc_{mech} + \eta_{hydr} \cdot F_{hydr}$$

$$F_{cfinal} = \eta_{mech} \cdot Fc_{mech} + \eta_{hydr} \cdot S_{ch}(j) \cdot C_{cal}$$

$F_{cfinal}$    - Klemmkraft nach Superposition
$\eta_{mech}$    - mechanischer Wirkungsgrad
$\eta_{hydr}$    - hydraulischer Wirkungsgrad
$Fc_{mech}$    - elektromechanisch bereitgestellte Klemmkraft
$F_{hydr}$    - hydraulisch bereitgestellte Klemmkraft
$S_{ch}(j)$    - zusätzlicher Weg während der Superposition
$C_{cal}$    - Federsteifigkeit der Bremszange

Dieser Vorgang wird solange fortgesetzt, bis der notwendige Weg des Bremskolbens 3 durchlaufen ist. Anschließend werden der elektromagnetische Aktuator 6 und der hydraulische Aktuator 17 abgeschaltet. Eine direkte Erfassung des Druckes ist somit nicht notwendig und auch die Genauigkeit der Druckstellung wird ausgeregelt.

Das hier vorgestellte Verfahren wird insbesondere dann angewendet, wenn das Fahrzeug an einer Steigung (beispielweise > 20%) abgestellt wird. Die Steigung kann mittels eines Lagesensors ermittelt werden. Insbesondere wird aufgrund der Erfindung verhindert, dass sich im Hydrauliksystem ein Unterdruck einstellt. Dieser soll auch selbst bei Tieftemperaturen, also sehr kalten Außentemperaturen, nicht entstehen.

Der Figur 3 ist noch im Hinblick auf die Drehzahlanforderung 34 und die Druckanforderung 35 zu entnehmen, dass abhängig von der aktuellen Spannungslage der Einschaltzeitpunkt $d_n$ des Antriebs 21 für die Hydraulikpumpe 22, der Gradient $g_n$ des Anlaufs des Antriebs 21 sowie eine Zieldrehzahl $l_n$ des Antriebs 21 definiert werden. In analoger Weise wird der Einschaltzeitpunkt der Druckstellung $d_p$, der Druckaufbaugradient $g_p$ und der Zieldruck $l_p$ festgelegt.

Wird die Regelung des Antriebs 21 im Wesentlichen durch die Vorschubgeschwindigkeit des Bremskolbens 3 bestimmt, wird die Druckanforderung maßgeblich durch den Druckabfall in der Hydraulik festgelegt. Für die Vorschubgeschwindigkeit kann in erster Näherung eine Spannungsabhängigkeit angenommen werden. Wenn die Geschwindigkeit des Antriebs 10 bekannt ist (z.B. Messung mittels Hall-Element) kann die reale Vorschubgeschwindigkeit zur Berechnung des notwendigen Volumenstromes verwendet werden. Der Druckabfall ist neben der Strömungsgeschwindigkeit sehr stark temperaturabhängig, wie dies bereits vorstehen erwähnt wurde. Für die Druckanforderung sind folgende Strategien möglich: die Temperatur des Hydraulikfluids 5 (Bremsflüssigkeit) ist bekannt (Temperatursensor) damit kann die Viskosität abgeschätzt werden und die Druckanforderung an das zu erwartende Strömungsverhalten (Druckabfall) angepasst werden. Ist die Temperatur des Hydraulikfluids 5 nicht bekannt, so wird angenommen, dass die Bremsflüssigkeit immer sehr kalt ist, z.B. - 20°C. Für diesen Fall ist der Druckabfall bekannt und die Druckanforderung kann entsprechend eingestellt werden. Es ist auch möglich, wie folgt vorzugehen, wenn die Temperatur der Bremsflüssigkeit (Hydraulikfluid 5) nicht bekannt ist. Es wird angenommen, dass mit einer definierten Toleranz die Temperatur der Bremsflüssigkeit mit der Außentemperatur korreliert. Somit würde die Außentemperatur das Niveau der Druckanforderung bestimmen.

Ziel der Erfindung ist immer eine möglichst kurze Ansteuerung der Hydraulikpumpe 22 bei möglichst geringer Pumpendrehzahl und geringem Druck, um die zusätzliche Geräuschentwicklung möglichst gering zu halten.

## Patentansprüche

1. Verfahren zum Betreiben einer im Superpositionsbetrieb arbeitenden Feststellbremse eines Fahrzeugs, wobei die Bremskraft der Feststellbremse mittels zweier unterschiedlicher, krafterzeugender Aktuatoren aufbringbar ist, die sich im Superpositionsbetrieb gegenseitig unterstützen, und wobei der krafterzeugende, insbesondere druckerzeugende Aktuator (16, 17) für die Unterstützung bereits vor der Superposition zur Druckabfallverhinderung oder Druckabfallminderung aktiviert wird, **dadurch gekennzeichnet, dass** das Einschalten eines ersten Antriebs (21) des ersten Aktuators (16) in Abhängigkeit von einem elektrischen Spannungsverlauf und/oder Drehzahlverlauf eines zweiten, den zweiten Aktuator (18) antreibenden Antriebs (10) erfolgt.

2. Verfahren nach Anspruch 1, **dadurch gekennzeichnet, dass** als der eine, erste Aktuator (16) ein hydraulischer oder ein pneumatischer Aktuator (17) verwendet wird.

3. Verfahren nach Anspruch 2, **dadurch gekennzeichnet, dass** als der andere, zweite Aktuator (18) ein elektromechanischer Aktuator (6) verwendet wird.

4. Verfahren nach einem der vorhergehenden Ansprüche, **dadurch gekennzeichnet, dass** als Aktuator (16, 17) für die Unterstützung der hydraulische Aktuator (17) verwendet wird.

5. Verfahren nach einem der vorhergehenden Ansprüche, **dadurch gekennzeichnet, dass** der Hydraulikdruck des ersten Aktuators (16, 17) von einer Hydraulikpumpe (22) geliefert wird und dass die Druckzuschaltung der Hydraulikpumpe (22) beim Erreichen eines vorgebbaren Hochlaufbetriebspunkts eines ersten Antriebs (21) des ersten Aktuators (16) erfolgt.

6. Verfahren nach einem der vorhergehenden Ansprüche, **dadurch gekennzeichnet, dass** als Antriebe (10, 21) Elektroantriebe verwendet wird.

7. Verfahren nach einem der vorhergehenden Ansprüche, **dadurch gekennzeichnet, dass** die zwischen Aktivierung und Superposition liegende Zeitspanne temperaturabhängig festgelegt wird.

8. Verfahren nach Anspruch 7, **dadurch gekennzeichnet, dass** als Temperatur die Temperatur eines Hydraulikfluids (5) des hydraulischen Aktuators (17) und/oder die Außentemperatur verwendet wird/werden.

9. Steuergerät, enthaltend Mittel, die zur Durchführung des Verfahrens nach einem oder mehreren der vorhergehenden Ansprüche ausgestaltet sind.

## Claims

1. Method for operating a parking brake, operating in the superposition mode, of a vehicle, wherein the braking force of the parking brake can be applied by means of two different force-generating actuators which assist one another in the superposition mode, and wherein the force-generating, in particular pressure-generating, actuator (16, 17) is activated for the assistance even before the superposition in order to prevent a drop in pressure or in order to reduce a drop in pressure, **characterized in that** the switching on of a first drive (21) of the first actuator (16) takes place as a function of an electrical voltage profile and/or rotational speed profile of a second drive (10) which drives the second actuator (18).

2. Method according to Claim 1, **characterized in that** a hydraulic or pneumatic actuator (17) is used as the one first actuator (16).

3. Method according to Claim 2, **characterized in that** an electromechanical actuator (6) is used as the other, second actuator (18).

**4.** Method according to one of the preceding claims, **characterized in that** the hydraulic actuator (17) is used as the actuator (16, 17) for the assistance.

**5.** Method according to one of the preceding claims, **characterized in that** the hydraulic pressure of the first actuator (16, 17) is supplied by a hydraulic pump (22), and **in that** the inputting of pressure of the hydraulic pump (22) takes place when a predefinable revving up operating point of a first drive (21) of the first actuator (16) is reached.

**6.** Method according to one of the preceding claims, **characterized in that** electric drives are used as the drives (10, 21).

**7.** Method according to one of the preceding claims, **characterized in that** the time period between the activation and the superposition is defined as a function of the temperature.

**8.** Method according to Claim 7, **characterized in that** the temperatur<e of a hydraulic fluid (5) of the hydraulic actuator (17) and/or the external temperature are/is used as the temperature.

**9.** Control unit containing means which are configured to carry out the method according to one or more of the preceding claims.

**Revendications**

**1.** Procédé destiné au fonctionnement d'un frein de stationnement d'un véhicule fonctionnant en mode de superposition, la force de freinage du frein de<<< stationnement pouvant être appliquée au moyen de deux actionneurs différents générant une force, lesquels s'assistent mutuellement en mode de superposition, et dans lequel l'actionneur générant une force, en particulier générant une pression (16, 17), est activé pour l'assistance déjà avant la superposition pour empêcher une chute de pression ou pour une réduction de la chute de pression, **caractérisé en ce que** l'enclenchement d'un premier entraînement (21) du premier actionneur (16) s'effectue en fonction de l'allure de la tension électrique et/ou de la vitesse de rotation d'un deuxième entraînement (10) entraînant le deuxième actionneur (18).

**2.** Procédé selon la revendication 1, **caractérisé en ce que** l'on utilise un actionneur hydraulique ou pneumatique (17) en tant que premier actionneur (16).

**3.** Procédé selon la revendication 2, **caractérisé en ce que** l'on utilise un actionneur électromécanique (6) en tant qu'autre, deuxième, actionneur (18).

**4.** Procédé selon l'une quelconque des revendications précédentes, **caractérisé en ce que** l'on utilise l'actionneur hydraulique (17) en tant qu'actionneur (16, 17) pour l'assistance.

**5.** Procédé selon l'une quelconque des revendications précédentes, **caractérisé en ce que** la pression hydraulique du premier actionneur (16, 17) est fournie par une pompe hydraulique (22) et **en ce que** la commutation sous pression de la pompe hydraulique (22) s'effectue une fois atteint un point de fonctionnement de pleine vitesse prédéfinissable d'un premier entraînement (21) du premier actionneur (16).

**6.** Procédé selon l'une quelconque des revendications précédentes, **caractérisé en ce que** l'on utilise comme entraînements (10, 21) des entraînements électriques.

**7.** Procédé selon l'une quelconque des revendications précédentes, **caractérisé en ce que** l'intervalle de temps entre l'activation et la superposition est fixé en fonction de la température.

**8.** Procédé selon la revendication 7, **caractérisé en ce que** l'on utilise en tant que température la température d'un fluide hydraulique (5) de l'actionneur hydraulique (17) et/ou la température extérieure.

**9.** Appareil de commande contenant des moyens prévus pour mettre en oeuvre le procédé selon l'une quelconque ou plusieurs des revendications précédentes.

## Fig. 1

Fig. 2

EP 2 504 599 B1

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007029927 A1
- DE 10150803 A1